# EUROPEAN PATENT APPLICATION

(11) **EP 4 095 783 A1**
(43) Date of publication of application: **30.11.2022**
(21) Application number: 22175250.4
(22) Date of filing: 24.05.2022
(51) Int. Cl.: G06Q 20/40

(54) **SYSTEM, METHOD AND APPARATUS FOR CREATING, TESTING AND DISSEMINATING FRAUD RULES**

(30) Priority: 25.05.2021 US 202117329990
(71) Applicant: Affirm, Inc., San Francisco, CA 94108 (US)
(72) Inventor: Nguyen, Fi-Khanh, Las Vegas, 89138 (US); Moriah, Shane, Zephyr Cove, 89448 (US); Nagalkar, Rohan Dhananjay, Bridgewater, 08807 (US); Sherry, Marc, San Francisco, 94110 (US); Blumenfeld, Maxwell, San Francisco, 94108 (US); Harris, Naftali, San Francisco, 94108 (US); Kim, Sung Hu, San Francisco, 94108 (US)
(74) Representative: Piotrowicz, Pawel Jan Andrzej

(57) **Abstract**

A method of employing fraud rules associated with identification of fraud in connection with financial transactions may include receiving information associated with a fraud scenario and defining a fraud rule based on the information. The fraud rule may include fraud criteria used to analyze financial transaction data to detect the fraud scenario and may also include a fraud response. The method may further include defining activation criteria for the fraud rule and enabling activation of the fraud rule for inclusion in product flows associated with the financial transactions in response to the activation criteria being met.

## Description

### TECHNICAL FIELD

Example embodiments generally relate to financial industry technologies and, in particular, relate to apparatuses, systems, and methods for managing fraud protection rules.

### BACKGROUND

The financial industry is comprised of many thousands of customers, vendors, lenders, borrowers, and other bit players that all interact in various ways to enable customers to ultimately have access to goods and services provided by vendors. Credit and debit transactions have long been a way that individuals have managed point of sale transactions to ensure seamless transfer of funds from customers, or on their behalf, to vendors for relatively routine or small transactions. Meanwhile, obtaining a loan from a bank has long been the most common way of obtaining financing for non-routine or larger transactions. More recently, buy now, pay later financing has become a popular option.

In many of the cases above, a customer may apply for credit via an online system that intakes certain information, and then makes determinations regarding whether (and in some cases how) to extend credit to the customer. The application process is typically automated in some form in terms of gathering required information, making any needed checks or confirmations (e.g., regarding identity verification, account verification, creditworthiness, etc.), making a decision on the application, and distribution of funds or advancing a line of credit. The automation of the process necessarily involves the employment of algorithms and policies that can often be executed via software programming.

Unfortunately, at least some of the transactions associated with applications and account activity may be fraudulent in nature. In order to sustainably provide the services described above to legitimate customers, it is important that fraudulent transaction attempts be identified and defeated with the highest possible success rates. Although fraudulent transactions often follow certain patterns that may, if recognized, give the ability to defeat the corresponding attempt to engage in a fraudulent transaction, those patterns can change dynamically overtime. In this regard, many fraudsters employ sophisticated efforts to determine the fraud rules that are being applied to combat them, and repeatedly attempt to skirt the rules or change their behavior patterns to avoid being targeted by any particular rule. Thus, a rapidly changing game can develop between fraudsters and the developers of fraud rules that are aimed at inhibiting the ability of fraudsters to succeed in their efforts. If the developers of fraud rules are inhibited in their ability to quickly roll out new, updated or improved fraud rules, the fraudsters may gain an upper hand in the dynamic game of "whack-a-mole" that may ensue.

### BRIEF SUMMARY OF SOME EXAMPLES

Accordingly, some example embodiments may enable the provision of technical means by which to give fraud rule developers the ability to develop and deploy new or updated fraud rules.

In an example embodiment, a method of employing fraud rules associated with identification of fraud in connection with financial transactions may be provided. The method includes receiving information associated with a fraud scenario and defining a fraud rule based on the information. The fraud rule may include fraud criteria used to analyze financial transaction data to detect the fraud scenario and may also include a fraud response. The method may further include defining activation criteria for the fraud rule and enabling activation of the fraud rule for inclusion in product flows associated with the financial transactions in response to the activation criteria being met.

In another example embodiment, an apparatus for employing fraud rules associated with identification of fraud in connection with financial transactions may be provided. The apparatus may include processing circuitry configured to receive information associated with a fraud scenario and define a fraud rule based on the information. The fraud rule may include fraud criteria used to analyze financial transaction data to detect the fraud scenario and may also include a fraud response. The processing circuitry may be further configured to define activation criteria for the fraud rule and enable activation of the fraud rule for inclusion in product flows associated with the financial transactions in response to the activation criteria being met.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for conducting financial transactions according to an example embodiment;
FIG. 2 illustrates a functional block diagram of a fraud module according to an example embodiment;
FIG. 3 illustrates a block diagram showing control flow for rule definition and activation in accordance with an example embodiment;
FIG. 4 illustrates a block diagram for control flow associated with handling product flows involving fraud rules, and a shadow mode, in accordance with an example embodiment; and
FIG. 5 illustrates a block diagram of a method of employing fraud rules associated with identification of fraud in connection with financial transactions in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a product management platform that can be instantiated at an apparatus comprising configurable processing circuitry. The processing circuitry may be configured to execute various processing functions on financial data using the techniques described herein. The product management platform may, for example, be configured to provide an information exchange via which multiple entities including an operator of the platform, or a financial company associated therewith, and applicants seeking to conduct financial transactions with (or with the assistance of) the financial company. As noted above, at least some of the financial transactions may be fraudulent in nature, and the product management platform may therefore include capabilities for detecting fraud to protect the company. Example embodiments may provide a highly capable system for defining fraud rules, and for deploying such rules quickly. This stands in contrast to today's paradigm in which not only does defining fraud rules have its own technical challenges, but getting such rules deployed may involve a significant overhaul to system software or other significant rollout effort that may increase the amount of time required before such rules can be activated.

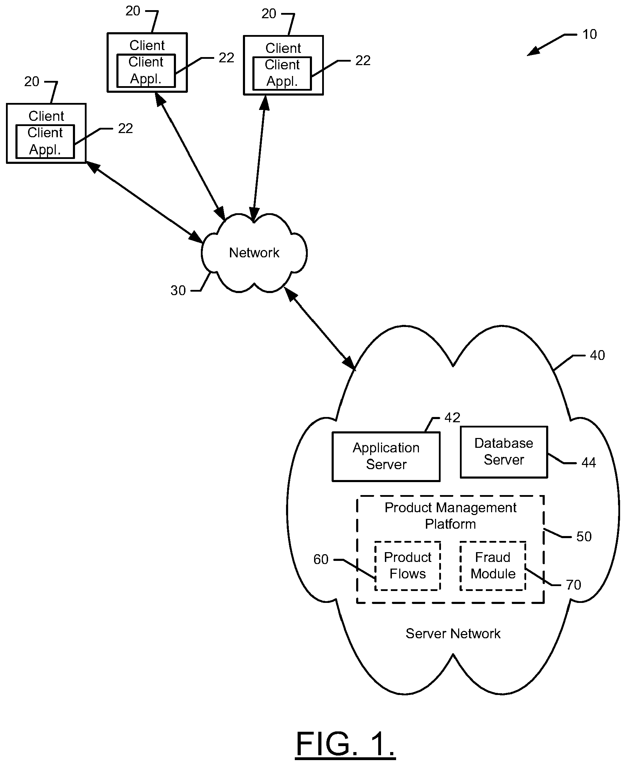

An example embodiment of the invention will now be described in reference to FIG. 1, which illustrates an example system in which an embodiment of the present invention may be employed. As shown in FIG. 1, a financial product management system 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system 10. Furthermore, in some cases, some embodiments may be practiced on a single client without any connection to the system 10.

The clients 20 may, in some cases, each be associated with a single individual or customer. However, in some embodiments, one or more of the clients 20 may be associated with an organization (e.g., a company) or group of individuals (e.g., a family unit). In general, the clients 20 may be referred to as customers hereinafter, and references to customers may be assumed to be equivalent to references to clients 20 except where specified.

Each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing financial data as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, devices to which the clients 20 may be coupled via the network 30 may include one or more application servers (e.g., application server 42), and/or a database server 44, which together may form respective elements of a server network 40. Although the application server 42 and the database server 44 are each referred to as "servers," this does not necessarily imply that they are embodied on separate servers or devices. As such, for example, a single server or device may include both entities and the database server 44 could merely be represented by a database or group of databases physically located on the same server or device as the application server 42. The application server 42 and the database server 44 may include hardware and/or software for configuring the application server 42 and the database server 44, respectively, to perform various functions. As such, for example, the application server 42 may include processing logic and memory enabling the application server 42 to access and/or execute stored computer readable instructions for performing various functions. In an example embodiment, one function that may be provided by the application server 42 may be the provision of access to information and/or services related to product management platform 50, and more particularly relating to facilitating financial transactions where, for example, the financial transaction may be an application for a buy now, pay later loan, or other products associated with credit or lending transactions. For example, the application server 42 may be configured to provide (via the product management platform 50) execution of instructions, and storage of information descriptive of events or activities, associated with the product management platform 50 and the execution of a financial transaction on behalf of a customer in real time. In some cases, the financial transaction may include obtaining buy now, pay later financing, and the activities associated therewith may include the provision of a loan/product application detailing information required by the lender (and operator of the product management platform 50) to determine whether credit, funds, or other products can be provided to the customer based on information provided in the loan/product application.

In some embodiments, the product management platform 50 may be a technical device, component or module affiliated with the lender or an agent of the lender. Thus, the product management platform 50 may operate under control of the lender or agent of the lender to be a technical means by which to carry out activities under direction of the lender/agent or employees thereof. As such, in some embodiments, the clients 20 may access the product management platform 50 services, and more particularly contact the product management platform 50 online and utilize the services provided thereby. However, it should be appreciated that in other embodiments, an application (e.g., the client application 22) enabling the clients 20 to interact with the product management platform 50 (or components thereof) may be provided from the application server 42 (e.g., via download over the network 30) to one or more of the clients 20 to enable recipient clients to instantiate an instance of the client application 22 for local operation such that the product management platform 50 may be a distributor of software enabling customers to participate in operation of the lender or agent via the product management platform 50. Alternatively, another distributor of the software may provide the client 20 with the client application 22, and the product management platform 50 may communicate with the client 20 (via the client application 22) after such download.

In an example embodiment, the client application 22 may therefore include application programming interfaces (APIs) and other web interfaces to enable the client 20 to conduct business via the product management platform 50. The client application 22 may include a series of control consoles or web pages including a landing page, onboarding services, activity feed, account settings (e.g., user profile information), transaction management services, payment management services and the like in cooperation with a service application that may be executed at the product management platform 50. Thus, for example, the client application 22 may enable the customer to fill out and submit a loan/product application or setup, access or adjust information associated with a customer account, or receive help or other information.

In an example embodiment, the application server 42 may include or have access to memory (e.g., internal memory or the database server 44) for storing instructions or applications for the performance of various functions and a corresponding processor for executing stored instructions or applications. For example, the memory may store an instance of the product management platform 50 configured to operate in accordance with an example embodiment of the present invention. In this regard, for example, the product management platform 50 may include software for enabling the application server 42 to communicate with the network 30 and/or the clients 20 for the provision and/or receipt of information associated with performing activities as described herein. Moreover, in some embodiments, the application server 42 may include or otherwise be in communication with an access terminal (e.g., a computer including a user interface) via which individual operators or managers of the entity associated with the facilitation agent may interact with, configure or otherwise maintain the product management platform 50.

As such, the environment of FIG. 1 illustrates an example in which provision of content and information associated with the financial industry (e.g., including at least some data provided to/from customers in real-time) may be accomplished by a particular entity (namely the product management platform 50 residing at the application server 42). Thus, the product management platform 50 may be configured to handle provision of content and information that are secured as appropriate for the individuals or organizations involved and credentials of individuals or organizations attempting to utilize the tools provided herein may be managed by digital rights management services or other authentication and security services or protocols that are outside the scope of this disclosure.

As noted above, the product management platform 50 may operate to enable the customer associated with a given one of the clients 20 to apply for a loan or other financial products in real time from a lender or agent associated with the product management platform 50. In some example embodiments, the client application 22 may be used in connection with applying for, setting up, and managing account details that are then used as the basis for interactions between the customer and the lender/agent under control of the product management platform 50. In this regard, for example, the client application 22 may be used to engage (e.g., via a website and corresponding APIs) with the product management platform 50 to set up an account with the lender/agent for services associated with the product management platform 50. The product management platform 50 may prompt the client 20 to provide account details, identity verification information, bank account information, credit card information, or other information associated with the financial transaction that is being undertaken (or that has previously been established) and may provide terms and conditions (electronically or via mail or other communication means) that the customer may accept to establish a user profile and user account with the lender/agent. In some cases, the customer may be provided with a card (e.g., a debit card or credit card) or other virtual or physical credentials that can be used to initiate transactions with vendors. Thus, it should be appreciated that the client application 22 could be used to set up the user account and user profile and/or to conduct individual transactions.

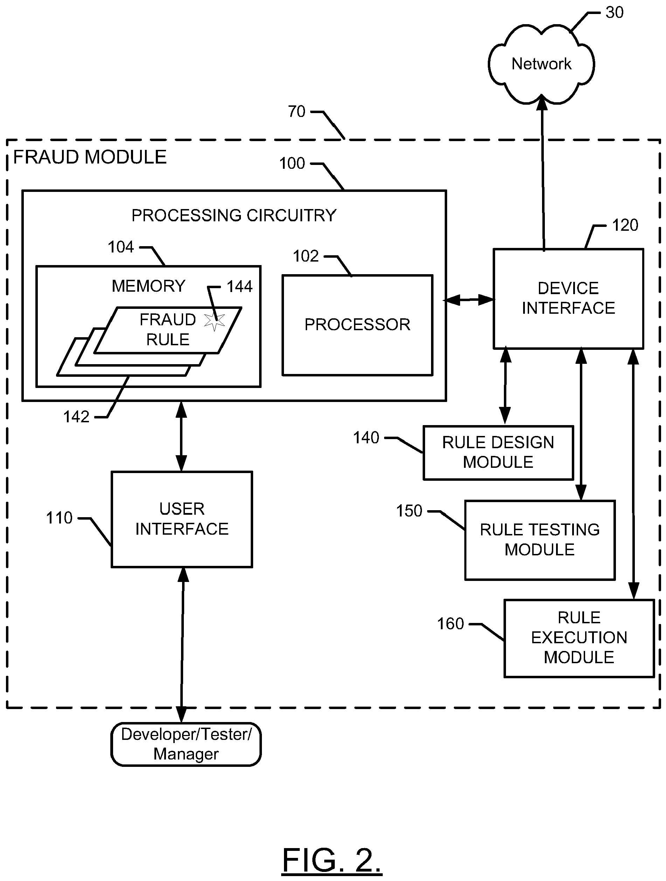

Regardless of how the transactions are initiated, the product management platform 50 of FIG. 1 may be used before, during and/or after the time of the transaction in order to enable the customer and/or the lender/agent to conduct various tasks in relation to the user account. These tasks may include account setup, moving funds into or out of the account to initiate or settle transactions, or other maintenance related activities. Each of these activities may have its own respective timing and communications that are facilitated by the product management platform 50 and various components of the product management platform 50. The components, which may be functional modules that operate via API or function calls to respective segmented platforms or a monolith or other collection of rules, policies, instructions, or the like. In an example embodiment, the product management platform 50 may include a collection of APIs or instructions associated with defining product flows 60 for each respective product offered. The product flows 60 may include messages or signaling that can be monitored (e.g., by a fraud module 70) to detect any signaling or other queues that may indicate potential fraud. The fraud module 70 may itself include various sub-modules or components (some of which are shown in greater detail in FIG. 2) that may be used to manage control flows associated with identifying fraud in accordance with rules for doing so, and for defining and deploying additional fraud rules in accordance with an example embodiment. Some of the structures associated with the fraud module 70 of an example embodiment will be described in reference to FIG. 2.

The product flows 60 may be specific to respective products offered by the lender or agent of the lender. In some cases, the fraud module 70 may be employed in connection with each of the product flows 60 to employ rules for detecting fraud in association with any part of the product flows 60. As will be seen below, the fraud module 70 may, in some cases, tailor individual rules to respective ones of the product flows 60, and may provide a streamlined way to design, test and activate rules.

FIG. 2 shows certain elements of an apparatus for provision of the fraud module 70 or other processing circuitry according to an example embodiment. The apparatus of FIG. 2 may be employed, for example, as the fraud module 70 itself operating at, for example, a network device, server, proxy, or the like (e.g., the application server 42 of FIG. 1)). Alternatively, embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 42) or by devices in a client/server relationship (e.g., the application server 42 and one or more clients 20). Thus, although FIG. 2 illustrates the fraud module 70 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating creation or design, testing, and implementation or activation of fraud rules that may be put in place to combat attempts by any of the clients 20 to initiate a transaction that may be fraudulent. In this regard, for the product flows 60 that occur to process financial transactions (e.g., applications for financial services such as loans, credit cards, etc.), the signaling associated with such processing, and the information provided by the applicants may be monitored by the fraud module 70. The fraud module 70 may be configured to allow rules to be created, tested, activated and employed. As such, for example, the fraud module 70 may be configured to perform analysis, scoring, or other determinations based on the signaling and/or the information provided to determine how likely the corresponding transaction is to be fraudulent (or non-fraudulent). The apparatus may be an embodiment of the fraud module 70 or a device of the product management platform hosting the fraud module 70. As such, configuration of the apparatus as described herein may transform the apparatus into the fraud module 70. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In situations where the processing circuitry 100 is embodied as a server or at a remotely located computing device, the user interface 110 may be disposed at another device (e.g., at a computer terminal) that may be in communication with the processing circuitry 110 via the device interface 120 and/or a network (e.g., network 30).

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, as indicated above, the user interface 110 may be remotely located.

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more non-transitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 44) that may store a variety of files, contents or data sets. Among the contents of the memory 104, applications (e.g., a service application configured to interface with the client application 22) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the fraud module 70, which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the fraud module 70 as described below.

The fraud module 70 may be configured to include tools to facilitate the creation of fraud rules, the testing of such rules, and the deployment of the rules (e.g., after sufficient testing has been completed) as described herein. The tools may be provided in the form of various modules that may be instantiated by configuration of the processing circuitry 100. FIG. 2 illustrates some examples of modules that may be included in the fraud module 70 and that may be individually configured to perform one or more of the individual tasks or functions generally attributable to the fraud module 70 according to an example embodiment. However, the fraud module 70 need not necessarily be modular. In cases where the fraud module 70 employs modules, the modules may, for example, be configured to perform the tasks and functions described herein. In some embodiments, the fraud module 70 and/or any components, modules or sub-modules comprising the fraud module 70 may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the fraud module 70 and/or any modules thereof, as described herein.

As shown in FIG. 2, the fraud module 70 may include a rule design module 140, a rule testing module 150, and a rule execution module 160. Each such module may be associated with specific functions or functionality for which the corresponding module has been configured (e.g., by a combination of hardware and/or software). However, as noted above, it should be appreciated that such functions need not necessarily be segmented into specific or separate modules, and code, instructions, or functional elements of any or all of the modules could be shared or collocated in various examples. Nevertheless, the descriptions that follow, which divide the functions into respective component modules are provided for illustrating a convenient or possible way to instantiate one example embodiment.

The rule design module 140 may include tools for creating, defining or modifying fraud rules 142 that may be stored (e.g., in memory 104) and accessed for execution as described below. The fraud rules 142 may, for example, define characteristics of signaling or information that are more likely (either alone or when noticed in a particular pattern or context) to be associated with fraudulent transactions. In an example embodiment, each of the fraud rules 142 may be understood to include or define fraud criteria (e.g., the characteristics that may correlate to fraudulent transactions, and a scoring paradigm for determining the fraud threshold), and a fraud response (e.g., indicating the action to be taken when the fraud threshold is exceeded). Thus, for example, the rule design module 140 may include an interface template for rule developers to use to define the fraud criteria and the fraud response for each of the fraud rules 142. The interface template may, for example, include web pages, control consoles or menus that include selectable fraud criteria (e.g., identifying various signals, patterns, and/or the like and any volume, frequency or other criteria that may apply to each). In some embodiments, a signal inventory may be provided to list all signals that may be used for fraud detection, and consequently also for defining fraud criteria. The interface template may also include selectable response actions that may be used for defining the fraud response. The actions may include terminating communication with the client 20, rejecting an application, flagging a transaction for human interaction/review, providing information to the client 20 or a specific responding agent regarding details of the transaction, or the like. Alternatively, rule developers may enter code instructions by any suitable means to define the fraud criteria and the fraud response without using interface templates or other tools.

In some embodiments, the rule design module 140 may include a component or sub-module for receiving either confirmed or suspected fraud scenarios (e.g., signaling or communications associated with confirmed or suspected fraud from past situations), which may be referred to as fraud scenario data. The fraud scenario data may have been detected by humans, or may be flagged by computer analysis (e.g., by the rule design module 140 or another component of the fraud module 70). The fraud scenario data may be collated based on case review, or any other methods that may be employed to identify fraud. In any case, when the fraud scenario data is received, the rule design module 140 may be used for scenarios classification. The classification may be done by the rule design module 140, or by human operators. However, once the classification is performed, the fraud scenario may be labeled or otherwise identified by type. Fraud type classifications may be industry standard classifications, or proprietary classifications. Tools specific to the fraud type classification may then be employed by the rule design module 140 to define the fraud criteria and fraud response for the corresponding instance of the fraud rule 142 that is generated.

Regardless of the specific methods or tools employed, the rule design module 140 may act as a "sandbox" for development of the fraud rules 142. The fraud rules 142 may then be implemented, tested, or merely stored for potential future implementation or testing. In some cases, all of the fraud rules 142 may be stored together at the same location or locations regardless of status (e.g., active, inactive, testing, etc.). However, in other examples, the memory 104 may be segmented, or the fraud rules 142 may be stored in separate locations that correlate specifically to their respective statuses. The rule design module 140 may expose API interfaces for creating, updating and deleting code segments and ultimately defining the fraud rules 142.

In an example embodiment, a user such as a developer, a tester, a manager, or the like, may interface with the rule design module 140 (e.g., via the user interface 110) in order to control the creation of new rules, or modification of existing rules, prior to the testing or implementation of such rules (by the rule testing module 150 and rule execution module 160, respectively). The fraud rules 142 may therefore transition through different stages, statuses and even locations within the fraud module 70, or within the product management platform 50 more generally. The fraud rules 142 may include calls to database objects, or tables defining the policies, commands or functions that are associated with each respective rule. The rules may include multiple tables that may be hierarchically related as described in greater detail below (e.g., parent tables common fraud rules, and respective child tables with more specific rules for products or activities).

In an example embodiment, the fraud rules 142 may be defined to be classified in ways that may facilitate targeted deployment of the fraud rules 142 in situations where they are most likely to be of use. For example, the fraud rules 142 may include an identifier 144 a product-based identifier or an activity-based identifier. The product-based identifier may include a product identifier and/or a product class identifier. Thus, in some cases, the fraud rules 142 may be classified at multiple levels to define an ontological structure (e.g., parent-child relationships, or other structures) for correlating individual fraud rules 142 to corresponding products or product classes. The classifications relating to product-based identifiers may depend upon regulatory differences associated with different products or product classes, differences in performance, differences in vendors, or any of numerous other differences that could be used to define different classifications of products in a hierarchically structured way (e.g., loans, specific types of loans, credit or debit card related products, etc.).

Alternatively, as noted above, activity-based identifiers may be used. Activity-based identifiers may relate to classifications that depend upon the activities or behaviors (e.g., signals, patterns, etc.) that fraudsters employ for different situations, and therefore the methods of corresponding behavioral or activity-based analyses that are used to detect the fraud. Thus, the classifications may be based on detection characteristics associated with patterns of behavior or distinctions related to the type of an attack or fraudulent transaction (e.g., false identity, false account information, etc.). Such classifications may enable selected ones of the fraud rules 142 to be efficiently applied only where desired, required or most effective. The fraud rules 142 can therefore be enforced for specific products or activities (and the corresponding product flows for the specific products and activities), but may not be employed for other products/activities for which the fraud rules 142 may not be a good match, or provide sufficient value or protection due to their design, or for specific types of activities and the product flows that include those types of activities.

In some embodiments, the fraud module 70 may also be useful for analyzing certain behaviors to try to discover new patterns or activities that may constitute fraud. For example, data associated with product flows may be collected and provided to the rule design module 140 (or a sub-module thereof). The rule design module 140 may be configured to parse the sets of signals associated with the data to determine commonalities between them (e.g., timing related, geographically related in terms of origin, etc.). Users may then review the signal commonalities and manually tune thresholds or add/remove conditions to identify targets for rules and tune rules. The use of shadow mode (described in greater detail below) may further enable users to see the full impact of rules during verification and prior to actively launching the rule.

The rule testing module 150 may enable the user (e.g., developer, tester or manager) to monitor the effectiveness or other impacts of the fraud rule 142 before the fraud rule 142 is activated to become part of the product flows. In an example embodiment, the rule testing module 150 may include or otherwise be used to define a testing mode, which may be referred to as a shadow mode, that can operate without impacting product flows (i.e., without adding any latency to product flows and without having the fraud response defined for the fraud rule 142 be launched). When the shadow mode is selected for a given one of the fraud rules 142 (e.g., a rule under test), the rule under test may be run on live product flows as a parallel process separate from the main product flow. Thus, the rule testing module 150 may apply the rule under test to the live product flow and record the determination made according to the rule under test as to whether the rule is triggered or not. The user may therefore be able to determine how the rule under test would have performed had the rule under test been activated for a given scenario (or series of scenarios) from the product flows.

In some cases, data indicative of the performance of each of the rules under test at any given time may be recorded by the rule testing module 150. The data indicative of performance may include, for example, whether the rule under test was triggered or not, and what signals or data were present and considered for potential triggering, latency associated with operation of the rule, hit rate of the rule, among other things. The logs or records may be reviewed by the user to determine whether the rule(s) under test are performing satisfactorily or in the intended way, or whether operation of the rule will result in too much latency, or too many hits. In other words, the user may determine whether the behaviors or situations that the rule under test was intended to target would have triggered the rule under test, and what the corresponding impacts of triggering would be. Risk validation and syntax validation may also be accomplished via the rule testing module 150. If a rule under test is judged to be effective or otherwise desirable for activation (i.e., transferring to active status), the rule testing module 150 may enable the rule under test to be taken out of shadow mode and therefore activated.

In some embodiments, the rule testing module 150 may further be configured to enable automatic risk validation (ARV) using past data. In this regard, for example, the rule testing module 150 may record data (or have access to such recorded data) that is associated with known fraud. The recorded data may correlate to a single incident of fraud or a plurality of similar instances of fraud. Moreover, in some cases, the recorded data may include specific fraud scenarios where the fraud was detected and recorded for later study and testing of rules. The rule testing module 150 may then evaluate (e.g., using ARV) what would have happened if a rule under test had been active when the fraud scenario occurred. Thus, not only may the rule testing module 150 enable real time testing of rules without impacting latency (in the shadow mode), but the rule testing module 150 may further be configured to run newly developed rules on old scenarios using ARV post hoc. By using a combination of ARV (relative to past data) and the shadow mode for current data, rules under test may be robustly evaluated for effectiveness against past and current threats, while also enabling any possible side effects of the operation of the rule under test to also be evaluated (e.g., by the rule testing module 150). In some cases, the ARV may be an additional function of the shadow mode, and may not necessarily be a separate mode or function of the rule testing module 150.

In some example embodiments, activation of fraud rules 142 may require authorization of certain stakeholders or responsible parties within an organization. To facilitate the ability to obtain such authorization, each of the fraud rules 142 may also include an identification (e.g., an authority indicator) of routing information for the individual or individuals (by name or title) that must grant permission or authorization prior to activation of any particular one of the fraud rules 142. Thus, in addition to the fraud criteria, the fraud response and the identifier 144, each of the fraud rules 142 may also include the authority indicator. In some embodiments, the authority indicator may include an email address or other message routing information to automatically send a message (e.g., via email or the other message routing service) to the individual or individuals that correspond to the authority indicator when the fraud rule 142 is ready for activation. The email (or other message) to the entity associated with the authority indicator may include data associated with operation of the fraud rule 142 in the shadow mode or performance using ARV to indicate the success of the fraud rule 142, or otherwise show results of analysis suggesting the fraud rule 142 will be successful in preventing the type of fraud for which it was designed to address. The approval of the entity associated with the authority indicator may, in some cases, be required to shift the fraud rule 142 into an active status, or may actually activate the fraud rule 142.

In some cases, the rule designer or user may prescribe a certain amount of time or validation data that should accumulate prior to activation of the fraud rule 142. Thus, for example, the rule design module 140 may include an ability to define activation criteria that define requirements for testing that should be completed before activation. The activation criteria may, for example, indicate that for a given identifier 144, a certain volume of testing data, or time of testing, should be completed before the fraud rule 142 can be sent to the entity associated with the authority indicator for activation. When the activation criteria have been achieved, the fraud rule 142 could automatically inform the entity associated with the authority indicator and attach any needed reports or supporting information for consideration/evaluation. Alternatively, the rule designer may manually handle this task. In either case, rule design module 140 and the rule testing module 150 may be cooperatively employed to facilitate preparing the fraud rules 142 for activation and execution.

When one or more of the fraud rules 142 are activated, each active rule may be identified, transferred, or otherwise made available for use to the rule execution module 160. In some cases, separate listings of active rules, inactive rules and rules under test (i.e., shadow mode rules) may be stored by the fraud module 70. However, in other cases, rules may be stored anywhere, and may include tags, labels or other indicia to indicate status (e.g., active, off/inactive, under-test, etc.). The rule execution module 160 may handle operation of rule execution in accordance with other product flows in order to provide fraud detection for each of the product flows using the active rules. Thus, the fraud rules 142 that are active for each respective path or product in a particular set of product flows may, when activated, run as part of the corresponding particular set of product flows. In other words, the fraud rules 142 that are activated become an integral part of the product flows in which they operate in an active state.

In an example embodiment, when signaling, information or patterns are detected that match the defined characteristics of the fraud rules 142 responsive to execution of a corresponding one of the fraud rules 142, a fraud score or indicator may be incrementally changed to reflect the degree of matching. In some cases, a fraud threshold may be defined as a score, rating or other value that indicates the accumulation of characteristics detected that may be associated with a fraudulent transaction is likely enough to merit taking action under the fraud rule, and therefore triggering the rule. In other words, for example, when the fraud criteria of the fraud rule 142 are met, then the fraud response of the fraud rule 142 may be triggered. However, in some cases, the fraud response may be the same for all rules or a set of rules (e.g., rejecting an application and communicating such rejection, recording the corresponding data, terminating a session, etc.).

Thus, as can be appreciated from the descriptions above, the fraud module 70 may be configured to be used as a tool to detect and characterize fraud (e.g., defining fraud scenarios labeled or classified by type). The fraud module 70 may then enable rules to be defined for the corresponding type of fraud for a given fraud scenario using tools specific to the corresponding type of fraud (as defined by the rule design module 140). Thereafter, any desired level of testing (either live and in shadow mode or on old data post hoc using ARV) may be performed using the rule testing module 150. The desired level of testing may be measured by time (e.g., how long testing is conducted) or other performance metrics (e.g., how many times the rule successfully fires). Finally, after desired (or required) testing is complete, the fraud rule 142 that results may be instituted quickly and efficiently by activating the rule for execution by the rule execution module 160.

In practice, there is no limit to how quickly a developed rule can be activated. In this regard, for example, certain rules may be prioritized for immediate release. Such rules may be designed (via the rule design module 140), and may have a prioritization that either defines minimal testing, or testing may be skipped entirely. The prioritized rule or rules may then be routed to the entity associated with the authority indicator and, once approved for released, may be activated within seconds. In this regard, once one of the fraud rules 142 is provided with an active status, the fraud rule 142 may immediately be integrated into the product flows, and may be active. When a rule is given active status, the rule is effective immediately, and is included with any applicable process flows for which the rule is called.

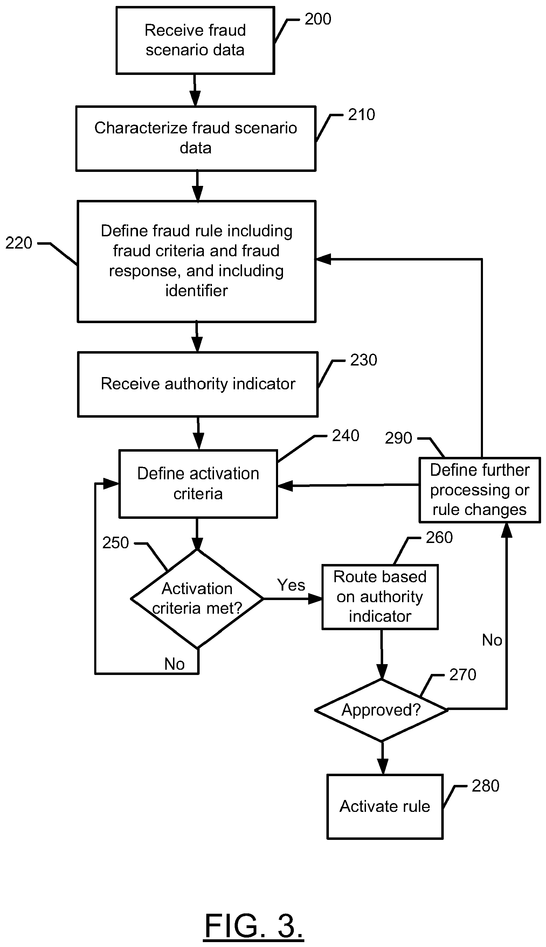

FIG. 3 illustrates a block diagram of a rule development paradigm that is achievable using an example embodiment. Referring to FIG. 3, a user (e.g., a developer, tester, or manager) may identify fraud and provide fraud scenario data to the fraud module 70. Thus, from the perspective of the fraud module 70, the fraud scenario data may be received at operation 200. The fraud scenario data may then be characterized (either by the fraud module 70, or a label provided by the user may indicate the same) at operation 210. Thereafter, at operation 220, a fraud rule may be defined for the fraud scenario data (e.g., via the rule design module 140). The fraud rule may include fraud criteria (defining the characteristics of signaling data or information that cause the fraud rule to trigger when present or detected) and a fraud response. As noted above, the fraud rule may include an identifier (indicating a product-based identifier or an activity-based identifier. Thereafter, at operation 230, an authority indicator may be received for the fraud rule. Activation criteria may thereafter be defined for the fraud rule at operation 240.

At operation 250, a determination may be made as to whether the activation criteria are met. The activation criteria could be specific testing metrics, or may simply be an indication that the rule is to be expedited for release. In any case, if the activation criteria are not met, a loop may be provided to continue processing at operation 240 until the activation criteria are met. Thus, for example, continued testing may occur until the activation criteria are met. If the activation criteria are met, then the rule may be routed to the entity associated with the authority indicator at operation 260. A determination may then be made at operation 270 as to whether the entity associated with the authority indicator has approved release of the rule (and therefore activation of the rule). If approved, the rule may be activated at operation 280. If not approved, the entity may define further processing or rule changes as shown at operation 290.

Once a rule is active, the rule may be added to the process flow for any process flow to which the rule applies. Modification of the rule after activation may, in some cases, require the rule to be shifted to an inactive or under-test status prior to modification. The rule may, once modified, be passed through the process of FIG. 3 starting at operation 220 where rule definition is replaced with rule modification in the verbiage of the operation. In some cases, each rule may have a name, and the named rule may be deleted when edited to create a new rule if the same name is to be used. As an alternative, a copy of a rule may be provided in the shadow mode, so that modification of the copy may occur in the shadow mode. When the rule is modified, a different name may be employed to permit both rules to exist actively, or the old rule may be deleted and the new rule (with either the same or a different name) may replace the old rule. In some embodiments, it may actually be possible to modify a rule while the rule remains active. In such cases, the rule may continue to operate in its previous (unmodified) form until the entity associated with the authority indicator approves the rule modification. Immediately after the rule modification is approved, the old rule may be substituted with the new (modified) rule.

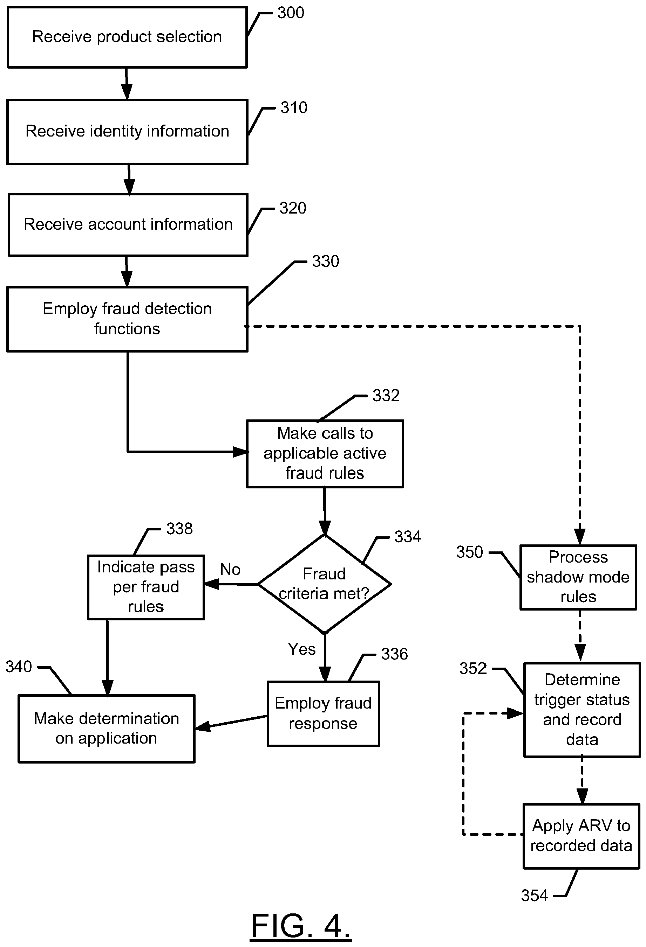

FIG. 4 shows a typical processing flow in accordance with an example embodiment. As shown in FIG. 4, a product flow may be defined to include receiving a product selection at operation 300. Receiving the product selection may be initiated online based on a customer engaging with a web page to select a product of interest. Thus, for example, the product selection may include a selection made by the customer of a particular product or service that the customer is interested in obtaining (e.g., buy now, pay later financing, or other loan service).

The product flow may further include receiving identity information at operation 310 and receiving account information at operation 320. The identity information may include information received from a customer identifying the customer by name, address, social security number, date of birth, or other criteria or identifying means. The account information may include information identifying one or more savings, checking or other bank accounts of the individual (or organization) identified by the identity information. The account information may also or alternatively include credit card or debit card information, including specific account or transaction information, or information about other purchases or transactions.

Another part of the product flow may include employing fraud detection functions at operation 330. Employing fraud detection functions may include making calls to activated fraud rules that apply to the product flow at operation 332. The fraud rules called may depend, for example, on the product selected, or may be associated with the activities defined in the product flow (as noted above). For each fraud rule called, a determination may be made at operation 334 as to whether the fraud criteria defined for the fraud rule have been met. If the fraud criteria are met, then the fraud response may be employed at operation 336, and failure may be indicated. If the fraud criteria are not met, then passage of the fraud testing may be indicated at operation 338. A final determination on the application may be made in association with the product flow at operation 340.

Although FIG. 4 shows one simple process, modifications may be included. For example, in some cases, additional verification paths may be included if fraud criteria are not met at operation 336. In this regard, instead of merely a go/no go test for fraud, additional interactions with the customer may be prescribed to enable the customer to provide additional information that may confirm that the transaction is not fraudulent.

Meanwhile, as shown in FIG. 4, a parallel flow may also be conducted for rules in shadow mode. In this regard, operation 330 may further include processing of shadow mode rules at operation 350. Notably however, the processing of shadow mode rules does not connect in any way to the determination made on the application at operation 340, and therefore does not increase latency. For each rule processed in the shadow mode, a determination may be made as to whether or not the rule is triggered, and all data (e.g., including scenario data and trigger status) may be recorded at operation 352. In some cases, other rules may be applied to the scenario data using ARV as shown at operation 354. In some embodiments, the user may also be enabled to compare metrics associated with the performance of various rules (or rule variants) to determine the performance of each rule against a given fraud scenario. Thus, for example, a number of rules that may apply to a similar or the same fraud scenario may be compared against each other to determine which rule performs the best. The best rule may then be selected and activated for immediate deployment.

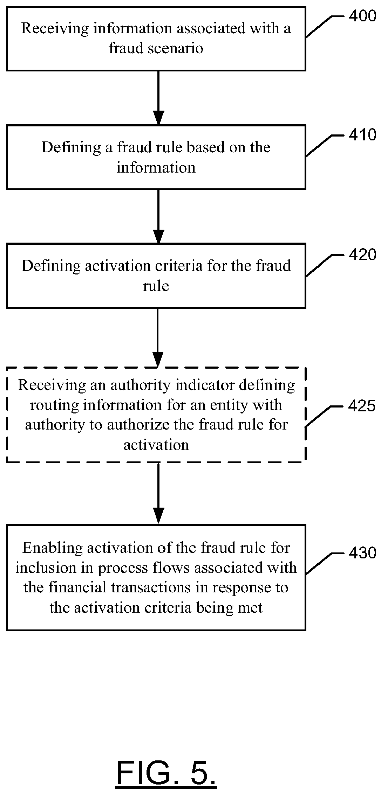

From a technical perspective, the fraud module 70 described above may be used to support some or all of the operations described above. As such, the apparatus described in FIG. 2 may be used to facilitate the implementation of several computer program and/or network communication based interactions. As an example, FIG. 5 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 40, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method of employing fraud rules associated with identification of fraud in connection with financial transactions according to one embodiment of the invention is shown in FIG. 5. The method may include receiving information associated with a fraud scenario at operation 400 and defining a fraud rule based on the information at operation 410. The fraud rule may include fraud criteria used to analyze financial transaction data to detect the fraud scenario and may also include a fraud response. The method may further include defining activation criteria for the fraud rule at operation 420 and enabling activation of the fraud rule for inclusion in product flows associated with the financial transactions in response to the activation criteria being met at operation 430.

In an example embodiment, an apparatus for performing the method of FIG. 7 above may comprise a processor (e.g., the processor 102) or processing circuitry configured to perform some or each of the operations (400-430) described above. The processor may, for example, be configured to perform the operations (400-430) by performing hardware implemented logical functions, executing stored instructions, or executing algorithms for performing each of the operations. In some embodiments, the processor or processing circuitry may be further configured for additional operations or optional modifications to operations 400 to 430.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, the method may further include receiving an authority indicator defining routing information for an entity with authority to authorize the fraud rule for activation (shown in dashed lines as optional operation 425). In this context, enabling activation of the fraud rule may include receiving an instruction to activate the fraud rule from the entity. In an example embodiment, the activation criteria may include testing requirements for operation of the fraud rule in a test mode. In some cases, the testing requirements may include a period of time or a number of trigger events of the fraud rule in the test mode. In an example embodiment, the test mode may operate on real time data in parallel with the processes of the product flows associated with the financial transactions. In some cases, the test mode may operate on stored test data to determine whether the fraud rule would trigger in response to the fraud scenario in the stored test data. In an example embodiment, defining the fraud rule may further include defining an identifier for the fraud rule, where the identifier indicates one or more product flows for which the fraud rule is to be applied when the fraud rule is active. In some cases, the identifier may be a product-based identifier. In an example embodiment, the product-based identifier may be a hierarchically structured identifier defining one of regulatory differences associated with different products or product classes, differences in performance between the different products or product classes, and differences in vendors between the different products or product classes.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method of employing fraud rules associated with identification of fraud in connection with financial transactions, the method comprising:
receiving information associated with a fraud scenario;
defining a fraud rule based on the information, the fraud rule including fraud criteria used to analyze financial transaction data to detect the fraud scenario and including a fraud response;
defining activation criteria for the fraud rule; and
enabling activation of the fraud rule for inclusion in product flows associated with the financial transactions in response to the activation criteria being met.

2. The method of claim 1, further comprising receiving an authority indicator defining routing information for an entity with authority to authorize the fraud rule for activation, and
wherein enabling activation of the fraud rule comprises receiving an instruction to activate the fraud rule from the entity.

3. The method of claim 1, wherein the activation criteria include testing requirements for operation of the fraud rule in a test mode.

4. The method of claim 3, wherein the testing requirements include a period of time or a number of trigger events of the fraud rule in the test mode.

5. The method of claim 3, wherein the test mode operates on real time data in parallel with the product flows associated with the financial transactions.

6. The method of claim 3, wherein the test mode operates on stored test data to determine whether the fraud rule would trigger in response to the fraud scenario in the stored test data.

7. The method of claim 1, wherein defining the fraud rule further includes defining an identifier for the fraud rule, the identifier indicating one or more product flows for which the fraud rule is to be applied when the fraud rule is active.

8. The method of claim 7, wherein the identifier is a product-based identifier.

9. The method of claim 8, wherein the product-based identifier is a hierarchically structured identifier defining one of:
regulatory differences associated with different products or product classes,
differences in performance between the different products or product classes, and
differences in vendors between the different products or product classes.

10. The method of claim 7, wherein the identifier is an activity-based identifier.

11. An apparatus for employing fraud rules associated with identification of fraud in connection with financial transactions, the apparatus comprising processing circuitry configured to perform the method of any of claims 1-10.
